# FASCICULE DE BREVET EUROPEEN

(11) **EP 1 232 204 B1**
(45) Date de publication et mention de la délivrance du brevet: **04.08.2004**
(21) Numéro de dépôt: 00966053.1
(22) Date de dépôt: 18.09.2000
(51) Int. Cl.: C08J 11/08, C08L 27/04

(54) **PROCEDE DE RECYCLAGE D'ARTICLES A BASE DE POLYMERES VINYLIQUES**
VERFAHREN ZUR WIEDERVERWENDUNG VON GEGENSTÄNDEN AUS VINYLPOLYMEREN
METHOD FOR RECYCLING VINYL POLYMER-BASED ARTICLES

(30) Priorité: 24.09.1999 FR 9912036
(43) Date de publication de la demande: 21.08.2002
(73) Titulaire: SOLVAY (Société Anonyme), 1050 Bruxelles (BE)
(72) Inventeur: VANDENHENDE, Bernard, B-2811 Leest (BE); YERNAUX, Jean-Marie, B-1330 Rixensart (BE)
(74) Mandataire: Jacques, Philippe
(86) Numéro de dépôt international: PCT/EP2000/009150
(87) Numéro de publication internationale: WO 2001/023463

(56) Documents cités:
- EP-A- 0 945 481
- CA-A- 617 788
- US-A- 3 475 218

## Description

La présente invention concerne un procédé pour le recyclage d'articles à base de polymères vinyliques tels que les polymères du chlorure de vinyle et du chlorure de vinylidène.

Ces polymères sont abondamment utilisés pour la fabrication d'articles variés, souples ou rigides, tels que par exemple des bâches, des tissus enduits et autres éléments pour l'habillage intérieur de véhicules, des tuyaux, des châssis de fenêtres ou des câbles électriques à isolation polymérique.

Un broyage poussé de ces articles conduirait le plus souvent à un mélange de fines particules de composition hétérogène, dont la purification et la réutilisation seraient difficiles. En outre, dans le cas d'articles renforcés par des fibres (par exemple de polyester), les fibres forment souvent une sorte d'ouate qui complique fortement la réutilisation des broyats.

Différents procédés basés sur une dissolution au moyen de solvants organiques ont déjà été proposés ; toutefois, ils posent souvent des problèmes de sécurité et de pollution. En outre, ils ne permettent pas toujours de recueillir des matières plastiques d'une pureté suffisante pour en permettre une réutilisation économiquement intéressante. Un autre inconvénient de ces méthodes est qu'elles provoquent généralement une extraction des additifs (p.ex. des plastifiants) contenus dans les polymères vinyliques, ce qui s'oppose à une réutilisation directe de ceux-ci. Enfin, ces procédés connus conduisent à l'obtention de très fines particules de polymère (de l'ordre du micron), qui sont difficiles à filtrer et à remettre en oeuvre.

Dès lors, la présente invention vise à fournir un procédé de recyclage qui soit simple, économique, sûr, peu polluant, et qui permette de recueillir des matières plastiques d'une pureté élevée et de morphologie avantageuse, en évitant substantiellement d'en extraire les éventuels additifs.

Plus précisément, la présente invention concerne un Procédé de recyclage d'un article à base d'au moins un polymère du chlorure de vinyle ou du chlorure de vinylidène, selon lequel :
(a) l'article est déchiqueté en fragments d'une dimension moyenne de 1 cm à 50 cm au cas où il excéderait ces dimensions ;
(b) les fragments d'article sont mis en contact avec un mélange azéotropique ou quasi-azéotropique d'eau et d'un solvant capable de dissoudre le polymère, à une température d'au moins 120°C ;
(c) on provoque la précipitation du polymère dissous dans le solvant par détente et par injection de vapeur d'eau dans la solution ainsi obtenue, ce qui provoque en outre l'entraînement de l'azéotrope solvant-eau et laisse ainsi subsister un mélange essentiellement constitué d'eau et de particules solides de polymère;
(d) on recueille les particules de polymère.

Les articles en question peuvent être de toute nature, pour autant qu'ils soient essentiellement constitués d'un ou plusieurs polymères du chlorure de vinyle ou du chlorure de vinylidène ("polymères du VC"). Par polymère du VC, on entend désigner tout homo- ou copolymère contenant au moins 50 % en poids de chlorure de vinyle et/ou de chlorure de vinylidène. On utilise généralement du polychlorure de vinyle (PVC) ou du polychlorure de vinylidène (PVDC), c'est-à-dire un homopolymère. Outre un ou plusieurs polymères du VC, les articles peuvent également comprendre un ou plusieurs additifs usuels tels que par exemple plastifiants, stabilisants, antioxydants, agents ignifugeants, pigments, matières de charge, y compris des fibres de renforcement, par exemple des fibres de verre ou d'une matière plastique appropriée telle qu'un polyester.

Les articles peuvent se présenter sous une forme quelconque, par exemple sous la forme de tuyaux souples ou rigides, de récipients, de feuilles pour le revêtement des sols, de bâches, de châssis de fenêtres, de gaines d'isolation de câbles électriques. Ils peuvent avoir été fabriqués par toute technique connue : extrusion, enduction, injection.

Les articles ne doivent pas forcément se présenter sous la forme d'objets présentant une forme bien définie ; le procédé s'applique également à des articles à l'état liquide ou pâteux, notamment à des boues recueillies lors du nettoyage d'installations utilisées pour la fabrications d'articles à partir de plastisols vinyliques. Outre un ou plusieurs polymères du chlorure de vinyle, ces articles à l'état liquide ou pâteux peuvent également comprendre un ou plusieurs solvants, par exemple du white-spirit.

Les éventuelles fibres de renforcement peuvent être de toute nature, naturelles ou synthétiques ; on peut notamment utiliser des fibres de verre, de cellulose ou de matière plastique. Il s'agit souvent de fibres de matière plastique, et en particulier de fibres de polyester. Le polyéthylène-téréphtalate (PET) donne de bons résultats, notamment, pour le renforcement de feuilles utilisées comme bâches. Le diamètre des fibres est habituellement de l'ordre de 10 à 100 µm. Dans les feuilles renforcées, il s'agit souvent de fibres longues, dont la longueur peut atteindre plusieurs mètres. Il peut toutefois également s'agir de fibres plus courtes, de quelques millimètres à quelques centimètres de longueur, formant éventuellement un tissu, un non-tissé ou un feutre. A titre illustratif, les fibres peuvent représenter de 1 à 40 % du poids d'une feuille renforcée.

La première étape (a) du procédé selon l'invention consiste, si nécessaire, à déchiqueter les articles de manière à les réduire en fragments de taille réduite, aisés à manipuler. La dimension moyenne de ces fragments est de préférence d'au moins 2 cm. Par ailleurs, elle est avantageusement d'au plus 30 cm. Ce déchiquetage peut se faire au moyen de tout dispositif approprié, par exemple au moyen de broyeurs à couteaux rotatifs ou à cisailles. Il est clair que si l'article se présente déjà sous la forme de fragments de dimensions appropriées, l'étape de déchiquetage est superflue. Dans certains cas, il peut être utile de soumettre les fragments d'articles ainsi obtenus à une étape intermédiaire de séparation, permettant d'éliminer par des techniques classiques telles que la flottation ou la séparation électrostatique d'éventuels constituants autres que des polymères du chlorure de vinyle ou du chlorure de vinylidène.

Les fragments d'articles ainsi obtenus sont ensuite soumis à l'action d'un solvant présentant plusieurs caractéristiques spécifiques. Cette opération peut s'effectuer dans tout dispositif approprié, compte tenu notamment des exigences de sécurité et d'environnement, par exemple dans un réacteur fermé présentant une résistance chimique suffisante. Le milieu réactionnel est de préférence agité. En vue d'éviter que les éventuelles fibres ne s'accrochent sur les moyens d'agitation et ne perturbent leur fonctionnement, une variante avantageuse consiste à effectuer la dissolution dans un récipient dans lequel est disposé un tambour rotatif perforé, tournant à une vitesse modérée (de préférence à moins de 100 tr/min). L'axe du tambour est de préférence approximativement horizontal. Dans le cas où l'article est renforcé par des fibres, un avantage supplémentaire d'un tel dispositif est qu'après avoir extrait la majorité du solvant de ce récipient, on peut mettre le tambour en rotation à vitesse élevée, de façon à "essorer" les fibres qu'il contient. Le(s) récipient(s) dans le(s)quel(s) s'effectuent la dissolution et la précipitation sera (seront) qualifié(s) de réacteur(s) ci-après.

Le solvant utilisé est une substance - ou un mélange de substances - capable de dissoudre le ou les polymères du chlorure de vinyle ou du chlorure de vinylidène que comprend l'article traité. Dans le cas où l'article est renforcé par des fibres, le solvant ne doit cependant pas provoquer la dissolution des fibres de renforcement. De manière surprenante, on a constaté qu'il n'est pas indispensable de limiter la teneur du solvant en eau à des valeurs très faibles, à condition d'utiliser une température de dissolution suffisante. Il n'est donc pas nécessaire de soumettre les articles à traiter à un séchage poussé, ni de prévoir des étapes visant à réduire fortement la teneur en eau du solvant. Par exemple, si l'on utilise comme solvant la méthyl-éthyl-cétone (MEK), une température de 105° correspond à un azéotrope MEK-eau contenant 15 % d'eau, ce qui constitue une teneur élevée. La disparition de ces contraintes est extrêmement avantageuse sur le plan industriel et économique, étant donné que le séchage des articles peut consommer une énergie considérable et que la séparation de l'eau contenue dans le solvant (par ex. dans de la méthyl-éthyl-cétone (MEK)) est une opération complexe qui nécessite au moins un réacteur supplémentaire, voire une colonne de distillation.

Il est nécessaire, dans le contexte du procédé selon l'invention, que le solvant utilisé soit miscible avec l'eau, et forme avec l'eau un azéotrope. Le solvant est avantageusement choisi parmi la méthyl-éthyl-cétone (MEK), la méthyl-isobutyl-cétone et le tétrahydrofurane. On préfère utiliser la MEK, qui forme avec l'eau un azéotrope comprenant (sous pression atmosphérique) 11 % d'eau et 89 % de MEK (en poids).

Le fait d'utiliser pour la dissolution un mélange azéotropique ou quasi-azéotropique d'eau et de solvant constitue, comme on le verra ci-dessous, une simplification considérable, dans la mesure où un tel mélange peut aisément être récupéré à la fin du procédé (par exemple par une simple décantation), et peut ainsi être réutilisé directement. Par "mélange azéotropique ou quasi-azéotropique", on entend indiquer que la composition du mélange n'est pas forcément précisément égale à la composition de l'azéotrope, mais qu'un léger écart (p.ex. de moins de 5 %) est admis, de manière notamment à tenir compte des variations de la composition azéotropique en fonction de la pression. En effet, comme cela sera exposé ci-dessous, les dernières étapes du procédé s'effectuent à une pression inférieure à celle régnant lors de la dissolution ; ceci implique que la teneur en eau du mélange (azéotropique) eau-solvant recueilli en fin de procédé est quelque peu inférieure à la teneur en eau de l'azéotrope eau-solvant à la pression de dissolution.

La dissolution (étape b) s'effectue sous une pression déterminée par la température. En général, cette pression est d'au moins 4 bars. Avantageusement, la pression n'excède pas 10 bars.

Il est en outre avantageux de travailler sous atmosphère inerte, par exemple sous azote, pour éviter tout risque d'explosion et de dégradation du solvant.

La quantité de solvant à utiliser doit être choisie de façon à éviter que l'augmentation de viscosité provoquée par la dissolution du polymère ne perturbe le bon déroulement du procédé (filtration, ...). On préfère que, lors de l'étape de dissolution (b), la quantité d'article n'excède pas 200 g par litre de solvant, et en particulier 100 g/l.

Dans la perspective d'une nouvelle mise en oeuvre du polymère du VC ainsi recueilli, une variante avantageuse du procédé selon l'invention consiste à incorporer au solvant, avant ou pendant l'étape de dissolution du polymère, un ou plusieurs additifs (stabilisants, plastifiants, etc.), dont les natures et les quantités soient adaptées aux propriétés que l'on souhaite conférer au polymère recyclé. Il est souhaitable, dans ce cas, que le ou les additifs ainsi incorporés soient solubles dans le solvant utilisé. D'éventuels additifs insolubles peuvent cependant être dispersés finement dans le solvant.

A l'issue de l'étape de dissolution (b), on dispose d'un mélange comprenant d'une part une phase liquide constituée du solvant dans lequel est dissous le polymère, et d'autre part les éventuels constituants non-dissous, par exemple des fibres de renforcement. La séparation de tels constituants peut par exemple se faire par filtration au moyen d'un tissu ou tamis dont les ouvertures présentent des dimensions de l'ordre de 0,1 à 10 mm. Cette séparation doit s'effectuer à une température suffisamment élevée pour éviter toute précipitation prématurée du polymère ; à cette fin, la température du mélange est avantageusement maintenue à au moins 75°C lors de cette séparation.

Dans les cas où l'article est renforcé par des fibres, on constate que les fibres ainsi récupérées sont d'une grande pureté. Afin d'accroître cette pureté, les fibres peuvent éventuellement être soumises à une étape ultérieure de centrifugation et/ou de lavage, par exemple au moyen du même solvant, en vue d'éliminer d'éventuelles traces résiduelles de polymère. Le solvant qui aurait été utilisé pour ce lavage peut avantageusement être mélangé au solvant frais utilisé pour l'étape de dissolution ; le fait qu'il contienne des traces de polymère dissous n'est pas préjudiciable à l'efficacité de la dissolution. Les fibres peuvent être réutilisées directement pour la fabrication d'articles renforcés à base de matière plastique.

Outre d'éventuelles fibres, cette éventuelle étape de séparation permet également de recueillir d'éventuels "accessoires" tels qu'oeillets métalliques, étiquettes, etc. incorporés dans l'article et qui n'en auraient pas été enlevés avant qu'il ne soit soumis au procédé selon l'invention. De même, on peut ainsi éliminer d'éventuels morceaux de conducteurs métalliques qui seraient restés dans des gaines de câbles électriques. Si nécessaire, le solvant contenant le polymère dissous peut être filtré plus finement en vue d'en éliminer d'éventuelles poussières ou autres particules insolubles, par exemple en utilisant un tissu ou tamis dont les ouvertures présentent des dimensions inférieures à 200 µm, de préférence inférieures à 20 µm. Comme indiqué ci-dessus, cette séparation doit également s'effectuer à une température suffisamment élevée pour éviter toute précipitation prématurée du polymère.

Dès lors, la présente invention concerne en particulier un procédé tel que décrit ci-dessus, dans lequel, avant de provoquer la précipitation du polymère dissous, on élimine les éventuels constituants non-dissous, à une température suffisante pour éviter la précipitation du polymère.

Après avoir éventuellement séparés les constituants solides, on provoque la précipitation du polymère dissous (étape c) en réduisant la pression, ce qui provoque généralement une diminution de la température. La détente s'effectue jusqu'à une pression à laquelle corresponde une température suffisamment faible pour que le polymère commence à précipiter, de préférence jusqu'à la pression atmosphérique. De plus, on injecte, dans le solvant contenant le polymère dissous, de la vapeur d'eau, en une quantité suffisante pour provoquer la précipitation complète du polymère dissous. On ajoute de préférence un large excès d'eau (vapeur ou liquide) par rapport à la composition azéotropique. Par exemple, dans le cas de la MEK, on ajoute généralement de 1 à 3 kg d'eau par kg de MEK. La détente et l'injection de vapeur d'eau provoquent la précipitation du polymère du VC sous forme de particules solides (encore substantiellement exemptes d'additifs à ce stade-ci), dont les dimensions moyennes sont de l'ordre du micron.

L'injection de vapeur d'eau a également pour effet de provoquer l'évaporation et l'entraînement de l'azéotrope eau-solvant, sous forme gazeuse, hors du réacteur contenant la solution. Cet azéotrope peut ensuite être recueilli et condensé. Le mélange qui subsiste (qui n'a pas été évaporé) est essentiellement constitué d'eau et de particules solides de polymère. Tant que la solution contient encore du solvant, la température de la phase gazeuse surmontant la solution reste approximativement égale à la température d'ébullition de l'azéotrope sous la pression utilisée (à titre d'exemple, la température d'évaporation de l'azéotrope MEK-eau est d'environ 73,5 °C sous pression atmosphérique).

Avantageusement, la précipitation du polymère (étape c) est réalisée par l'injection conjointe de vapeur d'eau et d'eau liquide, ce qui accélère la précipitation du polymère. Il n'est pas nuisible que cette eau contienne éventuellement une faible concentration de solvant ; ceci est intéressant dans la mesure où, comme exposé ci-dessous, une étape ultérieure du procédé fournit précisément une eau légèrement chargée en solvant, que l'on peut ainsi réutiliser sans épuration particulière.

Dès que la concentration de solvant dans la solution devient suffisamment faible, les additifs dissous dans la solution se déposent sur les particules de polymère, ce qui, de manière très avantageuse, favorise leur agglomération en grains (agglomérats) de l'ordre de 500 µm, qu'il sera très aisé de filtrer, de manipuler et de remettre en oeuvre par la suite (contrairement à des particules de l'ordre du micron). De manière surprenante, on a constaté que ces grains (agglomérats) de polymère présentent une morphologie extrêmement satisfaisante, et en particulier une granulométrie très peu dispersée.

Lorsque la quasi-totalité du solvant a été entraînée, la température de la phase gazeuse - tout comme celle de la phase liquide - se rapproche de la température d'ébullition de l'eau (sous la pression utilisée lors de la précipitation), ce qui constitue un moyen aisé de détecter l'élimination quasi-complète du solvant.

Une fois que la solution est substantiellement exempte de solvant, il est toutefois avantageux de mainteni: une température élevée (par exemple en poursuivant l'injection de vapeur) pendant encore au moins 5 minutes, et de préférence pendant au moins 10 minutes, ce qui, de manière surprenante, a une influence très favorable sur les propriétés et la morphologie des particules (agglomérées) de polymère (dureté, granulométrie, densité apparente, porosité, ...).

Un avantage très important de l'élimination du solvant au moyen de vapeur d'eau est que la majorité des éventuels additifs présents dans le polymère traité ne sont pas entraînés avec le solvant, et se redéposent sur les particules de polymère. Par conséquent, les particules de polymère recueillies à l'issue du procédé contiennent encore une fraction importante des additifs que contenait initialement le polymère (du moins ceux de ces additifs qui sont solubles dans le solvant ; ceci ne concerne généralement pas les éventuelles matières de charge, par exemple). Cette situation est particulièrement avantageuse étant donné que ces additifs sont souvent d'un coût élevé, et qu'en outre lesdites particules peuvent ainsi être réutilisées directement dans un procédé de fabrication d'articles à base de ce polymère. Cette réutilisation est facilitée par le fait que les particules ainsi récupérées sont prégélifiées, ce qui simplifie la mise en oeuvre par comparaison avec la mise en oeuvre d'un mélange hétérogène de granules de polymère et d'additifs ajoutés séparément. Les procédés connus de recyclage par dissolution-précipitation ne présentent pas cet avantage, vu qu'ils provoquent l'extraction de la majorité des additifs du polymère.

Un avantage complémentaire de l'injection de vapeur d'eau est qu'elle rend généralement superflu un chauffage extérieur du réacteur où se déroule le procédé. Cet avantage est très important sur le plan industriel : en effet, un chauffage extérieur (par l'intermédiaire de la paroi du réacteur) provoquerait des incrustations de polymère sur la paroi dudit réacteur (croûtage), nécessitant son nettoyage fréquent. Au contraire, dans le procédé de l'invention, l'injection de vapeur permet à la paroi de se trouver à une température plus faible, ce qui réduit fortement les risques de croûtage.

Un autre avantage du procédé de l'invention est que les éventuels émulsifiants que contenait le polymère traité passent en solution dans l'eau, et que les particules de polymère recueillies à l'issue du recyclage sont dès lors substantiellement exemptes d'émulsifiants, ce qui en facilite la mise en oeuvre ; en particulier, on évite des dépôts sur les installations de mise en oeuvre, ainsi que le formation de bulles à la surface des nouveaux produits ainsi obtenus.

Les particules (agglomérées) de polymère peuvent alors être aisément recueillies (étape d), par exemple par filtration du mélange eau-particules, et éventuellement séchées avant d'être stockées ou réutilisées. L'eau résiduelle est avantageusement épurée afin d'en éliminer les constituants dissous tels qu'émulsifiants ou autres.

Etant donné le coût du solvant et les inconvénients que son rejet dans l'environnement pourrait présenter, il est souhaitable de recycler la fraction liquide solvant/eau (plus riche en eau que l'azéotrope) recueillie à l'issue de l'étape de précipitation. Un avantage important du procédé de l'invention est qu'il est possible de la recycler de manière très simple et de la réutiliser totalement. En effet, une simple décantation permet de séparer la fraction liquide recueillie en :
- d'une part une fraction (supérieure) de composition (quasi-)azéotropique, c'est-à-dire majoritaire en solvant, contenant environ 10 % d'eau (la teneur exacte en eau dépend de la température et de la pression), qui peut être réutilisée dans l'étape de dissolution ;
- d'autre part une fraction (inférieure) majoritaire en eau (contenant p.ex. de l'ordre de 80 % d'eau), qui peut être réutilisée sous forme d'eau liquide et/ou de vapeur (après réchauffage) dans l'étape de précipitation (de manière surprenante et avantageuse, la présence d'une faible proportion de solvant n'est pas nuisible).

Malgré ces recyclages d'eau, un apport complémentaire d'eau est généralement nécessaire.

Le procédé selon l'invention peut être effectué de manière continue ou discontinue (batch), cette dernière variante étant préférée.

Un avantage important dudit procédé est qu'il peut fonctionner en boucle fermée, sans générer de rejets polluants, étant donné qu'aussi bien le solvant que l'éventuel agent de séparation du mélange solvant-eau peuvent être recyclés et réutilisés dans le procédé.

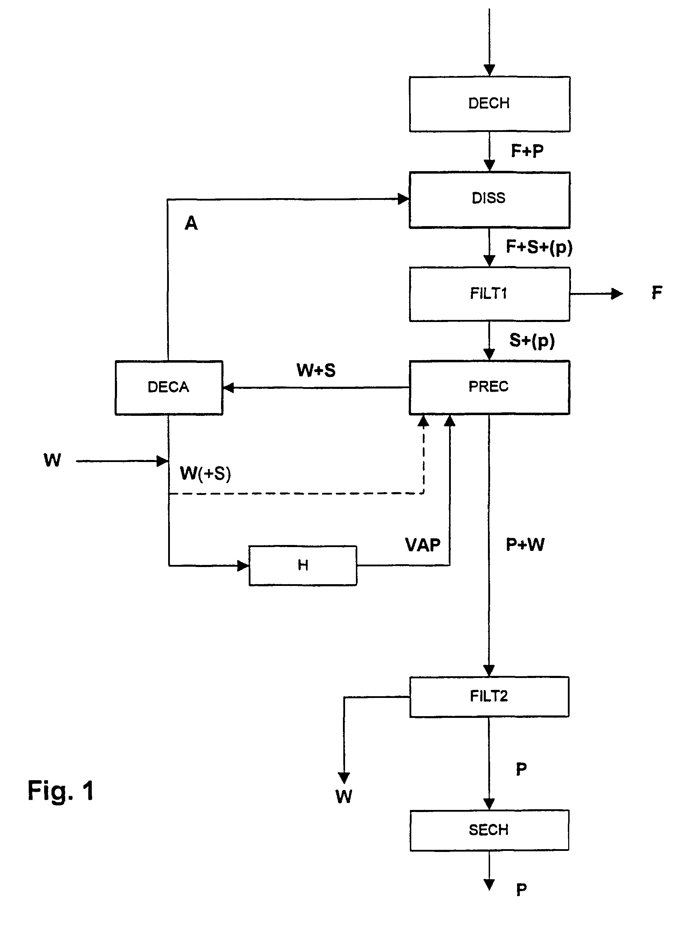

### DESCRIPTION DE LA FIGURE

La figure annexée illustre schématiquement, de façon non limitative, le déroulement d'une variante particulière du procédé selon l'invention, appliquée au recyclage de déchets de câbles électriques isolés par une gaine de PVC plastifié.

Les symboles utilisés ont les significations suivantes :
P : polymère solide S : solvant
(p) : polymère dissous W : eau
A : azéotrope solvant/eau F : éventuels constituants insolubles
VAP : vapeur d'eau (pouvant contenir une proportion minoritaire de solvant).

Les déchets sont tout d'abord déchiquetés (DECH) (étape a), puis le polymère qu'ils comprennent est dissous (DISS) (étape b) sous l'effet du mélange azéotropique solvant/eau (A), dans lequel peuvent éventuellement avoir été dissous certains additifs que l'on souhaite incorporer au polymère. Le mélange ainsi obtenu est alors filtré (FILT1), ce qui permet de séparer les éventuels constituants insolubles (F) (résidus métalliques, etc.) d'une solution du polymère dans le solvant (S+(p)). On provoque alors la précipitation du polymère (PREC) (étape c) en injectant dans cette solution de la vapeur d'eau (VAP) et éventuellement de l'eau liquide ("W(+S)") (pouvant contenir une faible proportion de solvant), ce qui provoque également l'élimination de l'azéotrope solvant-eau par entraînement. Les particules solides de polymère P (agglomérats) sont séparées par filtration (FILT2) (étape d) de l'eau W, que l'on épure avantageusement avant de la rejeter ou de la réutiliser, puis les particules sont séchées (SECH). La fraction W+S recueillie lors de la séparation, qui est plus riche en eau que l'azéotrope, est condensée (étape non-représentée), puis séparée par décantation (DECA), ce qui fournit d'une part une fraction azéotropique solvant/eau (A) qui peut être réutilisée dans l'étape de dissolution, et d'autre part une fraction majoritaire en eau ("W(+S)"), qui peut par exemple être réutilisée dans l'étape de précipitation, sous forme de vapeur (VAP) après une étape de chauffage (H), ainsi qu'éventuellement directement sous forme liquide.

## Revendications

1. Procédé de recyclage d'un article à base d'au moins un polymère du chlorure de vinyle ou du chlorure de vinylidène, selon lequel :
(a) l'article est déchiqueté en fragments d'une dimension moyenne de 1 cm à 50 cm au cas où il excéderait ces dimensions;
(b) les fragments d'article sont mis en contact avec un mélange azéotropique ou quasi-azéotropique d'eau et d'un solvant capable de dissoudre le polymère, à une température d'au moins 120°C;
(c) on provoque la précipitation du polymère dissous dans le solvant par détente et par injection de vapeur d'eau dans la solution ainsi obtenue, ce qui provoque en outre l'entraînement de l'azéotrope solvant-eau et laisse ainsi subsister un mélange essentiellement constitué d'eau et de particules solides de polymère;
(d) on recueille les particules de polymère.

2. Procédé selon la revendication 1, dans lequel l'étape de dissolution (b) est effectuée dans un récipient dans lequel est disposé un tambour rotatif perforé.

3. Procédé selon l'une des revendications précédentes, dans lequel le solvant est choisi parmi la méthyl-éthyl-cétone (MEK), la méthyl-isobutyl-cétone et le tétrahydrofurane.

4. Procédé selon l'une des revendications précédentes, dans lequel l'étape de dissolution (b) s'effectue sous une pression de 4 à 10 bars.

5. Procédé selon l'une des revendications précédentes, dans lequel, lors de l'étape de dissolution (b), la quantité d'article n'excède pas 200 g par litre de solvant.

6. Procédé selon l'une des revendications précédentes, dans lequel, avant de provoquer la précipitation du polymère dissous, on élimine les éventuels constituants non-dissous, à une température suffisante pour éviter la précipitation du polymère.

7. Procédé selon l'une des revendications précédentes, dans lequel la précipitation (c) du polymère est réalisée par l'injection conjointe de vapeur d'eau et d'eau liquide.

8. Procédé selon l'une des revendications précédentes, dans lequel la fraction liquide solvant/eau recueillie à l'issue de l'étape de précipitation (c) est séparée par décantation :
- une première fraction de composition azéotropique ou quasi-azéotropique, que l'on réutilise dans l'étape de dissolution (b) ;
- une seconde fraction majoritaire en eau, que l'on réutilise dans l'étape de précipitation (c).

9. Procédé selon l'une des revendications précédentes, dans lequel l'article est une feuille.

## Claims

1. Process for recycling an article based on at least one vinyl chloride or vinylidene chloride polymer, according to which:
(a) the article is cut up into fragments with a mean size of 1 cm to 50 cm in the case where it would exceed these sizes;
(b) the article fragments are brought into contact with an azeotropic or quasiazeotropic mixture of water and of a solvent capable of dissolving the polymer, at a temperature of at least 120°C;
(c) the polymer dissolved in the solvent is precipitated by a reduction in pressure and by injection of steam into the solution thus obtained, which additionally results in the entrainment of the solvent-water azeotrope and thus leaves a mixture remaining which is essentially composed of water and of solid polymer particles;
(d) the polymer particles are collected.

2. Process according to Claim 1, in which the dissolution stage (b) is carried out in a container in which is positioned a perforated rotary drum.

3. Process according to claim 1, in which the solvent is chosen from methyl ethyl ketone (MEK), methyl isobutyl ketone and tetrahydrofuran.

4. Process according to claim 1, in which the dissolution stage (b) is carried out under a pressure of 4 to 10 bar.

5. Process according to claim 1, in which, during the dissolution stage (b), the amount of article does not exceed 200 g per litre of solvent.

6. Process according to claim 1, in which, before precipitating the dissolved polymer, the possible undissolved constituents are removed at a temperature sufficient to prevent the precipitation of the polymer.

7. Process according to claim 1, in which the precipitation (c) of the polymer is carried out by the joint injection of steam and of liquid water.

8. Process according to claim 1, in which the solvent/water liquid fraction collected on conclusion of the precipitation stage (c) is separated by settling into:
- a first fraction with an azeotropic or quasiazeotropic composition, which is reused in the dissolution stage (b);
- a second fraction predominantly of water, which is reused in the precipitation stage (c).

9. Process according to claim 1, in which the article is a sheet.

## Patentansprüche

1. Verfahren zur Recyclierung eines Gegenstandes auf der Basis wenigstens eines Vinylchloridpolymers oder Vinylidenchloridpolymers, wonach
(a) der Gegenstand zu Stücken mit einer mittleren Abmessung von 1 cm bis 50 cm, falls er diese Abmessungen überschreitet, zerkleinert wird;
(b) die Stücke des Gegenstandes mit einem azeotropen oder quasiazeotropen Gemisch aus Wasser und einem zum Auflösen des Polymers befähigten Lösungsmittel bei einer Temperatur von wenigstens 120°C in Kontakt gebracht werden;
(c) durch Entspannen und Einspritzen von Wasserdampf in die so erhaltene Lösung die Ausfällung des im Lösungsmittel gelösten Polymers hervorgerufen wird, wodurch überdies das Azeotrop Lösungsmittel-Wasser mitgeführt wird und solcherart ein Gemisch zurückbleibt, das im wesentlichen aus Wasser und festen Teilchen des Polymers besteht;
(d) die Teilchen des Polymers gewonnen werden.

2. Verfahren nach Anspruch 1, worin die Auflösungsstufe (b) in einem Behälter bewirkt wird, in dem eine perforierte Drehtrommel angeordnet ist.

3. Verfahren nach einem der vorstehenden Ansprüche, worin das Lösungsmittel unter Methylethylketon (MEK), Methylisobutylketon und Tetrahydrofuran ausgewählt wird.

4. Verfahren nach einem der vorstehenden Ansprüche, worin die Auflösungsstufe (b) unter einem Druck von 4 bis 10 bar ausgeführt wird.

5. Verfahren nach einem der vorstehenden Ansprüche, worin in der Auflösungsstufe (b) die Menge des Gegenstandes 200 g/l Lösungsmittel nicht überschreitet.

6. Verfahren nach einem der vorstehenden Ansprüche, worin vor dem Bewirken der Ausfällung des aufgelösten Polymers eventuelle ungelöste Bestandteile bei einer zur Vermeidung der Ausfällung des Polymers ausreichenden Temperatur beseitigt werden.

7. Verfahren nach einem der vorstehenden Ansprüche, worin das Ausfällen (c) des Polymers durch gemeinsames Einspritzen von Wasserdampf und flüssigem Wasser bewirkt wird.

8. Verfahren nach einem der vorstehenden Ansprüche, worin die am Ende der Ausfällungsstufe (c) erhaltene flüssige Lösungsmittel/Wasser-Fraktion durch Dekantieren in
- eine erste Fraktion mit azeotroper oder quasi-azeotroper Zusammensetzung, die in der Auflösungsstufe (b) wiederverwendet wird;
- eine zweite, an Wasser überwiegende Fraktion, die in der Fällungsstufe (c) wiederverwendet wird,
aufgetrennt wird.

9. Verfahren nach einem der vorstehenden Ansprüche, worin der Gegenstand eine Folie ist.
